# EUROPÄISCHE PATENTSCHRIFT

(11) **EP 3 335 929 B1**
(45) Veröffentlichungstag und Bekanntmachung des Hinweises auf die Patenterteilung: **19.06.2019**
(21) Anmeldenummer: 17203455.5
(22) Anmeldetag: 24.11.2017
(51) Int. Cl.: B60N 2/50, B60N 2/54, F16F 1/44

(54) **FAHRZEUGSITZ MIT FEDERUNG**
VEHICLE SEAT WITH SUSPENSION
SIÈGE DE VÉHICULE DOTÉ DE SUSPENSION

(30) Priorität: 13.12.2016 DE 102016124228
(43) Veröffentlichungstag der Anmeldung: 20.06.2018
(73) Patentinhaber: GRAMMER AG, 92224 Amberg (DE)
(72) Erfinder: Schanderl, Florian, 92521 Schwarzenfeld (DE); Meier, Johann, 92269 Fensterbach (DE)
(74) Vertreter: Hannke, Christian

(56) Entgegenhaltungen:
- EP-A1- 2 416 030
- DE-C- 971 666
- US-A- 5 876 085

## Beschreibung

Die Erfindung betrifft einen Fahrzeugsitz mit einem Fahrzeugsitzoberteil und einem Fahrzeugsitzunterteil, wobei das Fahrzeugsitzoberteil relativ zum Fahrzeugsitzunterteil bewegbar ist und das Fahrzeugsitzoberteil mittels einem Federungs- und Dämpfungselement gegenüber dem Fahrzeugsitzunterteil federbar und dämpfbar ist.

Es sind aus dem Stand der Technik vielseitige Ausgestaltungen eines derartigen Fahrzeugsitzes bekannt (siehe zum Beispiel die US-A-5876085), wobei mittels aufwändiger Konstruktionen, beispielsweise mittels Zusatzvolumina für eine Luftfeder, die Federkennlinie der Luftfeder einstellbar ist. Derartige Konstruktionen sind jedoch aufwändig, kostenintensiv und benötigen viel Platz innerhalb eines Fahrzeugs.

Es ist demzufolge Aufgabe der vorliegenden Erfindung, einen Fahrzeugsitz mit einer Federung bereitzustellen, welche einfach, kostengünstig und wartungsarm ist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, einen Fahrzeugsitz mit einem Fahrzeugsitzoberteil und einem Fahrzeugsitzunterteil, wobei das Fahrzeugsitzoberteil relativ zum Fahrzeugsitzunterteil bewegbar ist und das Fahrzeugsitzoberteil mittels einem Federungs- und Dämpfungselement gegenüber dem Fahrzeugsitzunterteil federbar und dämpfbar ist, wobei das Federungs- und Dämpfungselement ein reversibel verformbares Kunststoffelement und ein Einstellelement aufweist, wobei das Kunststoffelement und das Einstellelement in Wirkkontakt stehen und abhängig von der Stellung des Einstellelements relativ zum Kunststoffelement die Federkennlinie des Federungs- und Dämpfungselements einstellbar ist.

Unter "reversibel verformbar" ist vorliegend insbesondere zu verstehen, dass das Kunststoffelement, nachdem es verformt wurde und keine Kraft mehr auf das Kunststoffelement einwirkt, es sich wieder in seine Ausgangsform zurückverformt.

Bei einer Bewegung des Fahrzeugsitzoberteils relativ zu dem Fahrzeugsitzunterteil, also beispielsweise durch eine Einwirkung einer Kraft auf den Fahrzeugsitz aufgrund von äußeren Einwirkungen, wird das Kunststoffelement durch das Einstellmittel, welches in Wirkkontakt mit dem Kunststoffelement steht, deformiert, wodurch eine Dämpfung und/oder Federung der Relativbewegung des Fahrzeugsitzoberteils zu dem Fahrzeugsitzunterteil hervorgerufen wird.

Die Federkennlinie des Federungs- und Dämpfungselementes wird erfindungsgemäß mittels des Einstellelements vorgenommen. Abhängig von der Stellung des Einstellelements relativ zum Kunststoffelement kann die Federkennlinie des Federungs- und Dämpfungselements eingestellt werden.

Gemäß einer ersten bevorzugten Ausführungsform weist das Einstellmittel eine in einer Fahrzeugsitzbreitenrichtung oder eine in einer Fahrzeugsitzlängsrichtung verlaufende Drehachse auf, um welche das Einstellmittel drehbar gelagert ist, und mindestens drei verschiedene Funktionsbereiche aufweist, wobei ein erster Funktionsbereich rechteckig ausgestaltet ist, ein zweiter Funktionsbereich erste Erhöhungen und erste Vertiefungen aufweist, welche senkrecht zu der Fahrzeugsitzbreitenrichtung angeordnet sind, und ein dritter Funktionsbereich zweite Erhöhungen und zweite Vertiefungen aufweist, welche senkrecht zu der Fahrzeugsitzbreitenrichtung oder senkrecht zu der Fahrzeugsitzlängsrichtung angeordnet sind.

Insbesondere sind die Funktionsbereiche mittels Drehung des Einstellmittels mit dem Kunststoffelement in Kontakt bringbar, so dass jeweils nur ein Funktionsbereich mit dem Kunststoffelement in Wirkkontakt steht. Weiter vorzugsweise ist der erste Funktionsbereich flach ausgebildet.

Gemäß einer weiteren bevorzugten Ausführungsform unterscheiden sich die ersten Erhöhungen und ersten Vertiefungen in ihrer Ausgestaltung, insbesondere der Erstreckung senkrecht zu der Drehachse, jeweils von den zweiten Erhöhungen und zweiten Vertiefungen.

Dabei wird eine Federung bzw. eine Dämpfung des Fahrzeugsitzes wie folgt erreicht. Ist durch die Einstellung der Stellung des Einstellmittels der zweite oder dritte Funktionsbereich mit dem Kunststoffelement in Wirkkontakt, so geschieht bei einer Bewegung des Fahrzeugsitzoberteils relativ zum Fahrzeugsitzunterteil das Folgende. Das Kunststoffelement wird durch das Einstellmittel belastet und im Bereich der Erhöhungen stärker belastet als im Bereich der Vertiefungen. Je weiter sich die Erhöhungen senkrecht zu der Drehachse erstrecken, desto geringer ist die insgesamte Belastung des Kunststoffelements durch das Einstellmittel, das das Kunststoffelement teilweise in die Vertiefungen ausweichen kann.

Ist der erste Funktionsbereich des Einstellmittels mit dem Kunststoffelement in Wirkkontakt, so wird das Kunststoffelement im Falle der Bewegung des Fahrzeugsitzoberteils relativ zu dem Fahrzeugsitzunterteil das Kunststoffelement flächig belastet und deformiert, so dass das Kunststoffelement nicht in Vertiefungen ausweichen kann, da keine Vertiefungen vorgesehen sind. Die Federkennlinie in diesem Fall ist steiler ausgestaltet, da das Kunststoffelement in sich gestaucht werden muss, als dies der Fall bei dem zweiten oder dritten Funktionsbereich ist.

Vorzugsweise sind die jeweiligen zusammengehörenden Erhöhungen und Vertiefungen des Einstellmittels abwechselnd in Fahrzeugsitzbreitenrichtung oder Fahrzeugsitzlängsrichtung hintereinander angeordnet.

Besonders vorteilhaft ist die Drehachse und das Kunststoffelement in Fahrzeugsitzbreitenrichtung oder in Fahrzeugsitzlängsrichtung verlaufend angeordnet.

Gemäß einer zweiten bevorzugten Ausführungsform das Einstellmittel eine in einer Fahrzeugsitzbreitenrichtung oder eine in einer Fahrzeugsitzlängsrichtung verlaufende Drehachse aufweist, um welche das Einstellmittel drehbar gelagert ist, wobei das Einstellmittel als eine Welle mit dritten Erhöhungen und dritten Vertiefungen ausgestaltet ist, wobei jeweils einer Erhöhung eine Vertiefung und jeder Vertiefung eine Erhöhung in Fahrzeugsitzbreitenrichtung gesehen nachfolgt, wobei sich die Erhöhungen im Querschnitt in Fahrzeugsitzbreitenrichtung gesehen exzentrisch verjüngen.

Das Funktionsprinzip dieser zweiten Ausführungsform ist gleich dem Funktionsprinzip der ersten Ausführungsform, jedoch unterscheiden sich diese Ausführungsformen in der Ausgestaltung des Einstellmittels.

Gemäß der zweiten Ausführungsform verjüngen sich die dritten Erhöhungen exzentrisch im Querschnitt. Der Querschnitt der minimalsten Verjüngung entspricht vorzugsweise im Wesentlichen einem ersten Kreis mit Mittelpunkt auf der Drehachse, wobei der Querschnitt der maximalen Verjüngung einem zweiten Kreis mit Mittelpunkt auf einer Exzenterwelle entspricht mit einem Radius, so dass sich der erste Kreis und der zweite Kreis im Querschnitt in Fahrzeugsitzbreitenrichtung oder Fahrzeugsitzlängsrichtung gesehen zumindest in einem Punkt berühren.

Die Tatsache, dass sich der erste und der zweite Kreis zumindest in einem Punkt berühren, hat zur Folge, dass durch die Berührungsfläche, also eine Teilfläche der Exzenterwelle, eine durchgängige Fläche entsteht, was gleichbedeutend mit dem ersten Funktionsbereich ist.

Durch Drehung des Einstellmittels können, aufgrund der exzentrischen Verjüngung, unendlich viele Funktionsbereiche mit Erhöhungen und Vertiefungen hergestellt werden, so dass eine präzise Einstellung der Federkennlinie möglich ist.

Gemäß einer dritten Ausführungsform ist das Einstellmittel in einer Fahrzeugsitzlängsrichtung verschiebbar ist und im Wesentlichen quaderförmig ausgestaltet, wobei das Einstellmittel erste Bereiche, die in Fahrzeugsitzlängsrichtung gesehen nach hinten oder nach vorne in ihrer Ausdehnung in einer Fahrzeugsitzhöhenrichtung stetig zunehmen, um vierte Vertiefungen ausbilden, und zweite Bereiche, welche in Fahrzeugsitzhöhenrichtung gesehen vierte Erhöhungen ausgestalten.

Durch Verschiebung des Einstellmittels gemäß der dritten Ausführungsform wird während der Verschiebung des Einstellmittels die Ausdehnung der Erhöhungen bzw. der Vertiefungen verändert, welche mit dem Kunststoffelement in Wirkkontakt stehen. Dadurch wird der gleiche Effekt wie bei der ersten oder der zweiten Ausführungsform erreicht, nämlich, dass sich die Federkennlinie entsprechend einstellen lässt.

Gemäß einer weiteren bevorzugten Ausführungsform kann die Federkennlinie des Federungs- und Dämpfungselements weiter verändert werden, wenn das Kunststoffelement mindestens eine Ausnehmung aufweist, wobei bevorzugt vorzugsweise die Ausnehmung als eine Durchgangsöffnung ausgestaltet ist. Die Durchgangsöffnung erstreckt sich in Fahrzeugsitzlängsrichtung, wenn sich das Einstellmittel in Fahrzeugsitzbreitenrichtung erstreckt, und umgekehrt.

Gemäß einer weiteren bevorzugten Ausführungsform ist das Kunststoffelement im Wesentlichen quaderförmig ausgebildet, wobei die Längserstreckung des Kunststoffelements größer ist als die Höhenerstreckung oder die Tiefenerstreckung des Kunststoffelements.

Durch Ausnehmungen, insbesondere Durchgangsöffnungen des Kunststoffelements kann die Federkennlinie des Federungs- und Dämpfungselements in folgender Art und Weise beeinflusst werden. Besonders bevorzugt sind die Erhöhungen der jeweiligen Ausführungsform in Fahrzeugsitzhöhenrichtung gesehen direkt über den Ausnehmungen angeordnet. Durch die Relativbewegung des Fahrzeugsitzoberteils zu dem Fahrzeugsitzunterteil wird eine Deformation des Kunststoffelements hervorgerufen, wobei durch die Ausnehmungen eine geringere Dämpfung bzw. Federung des Fahrzeugsitzes resultiert, da weniger Material durch das Einstellelement deformiert werden muss.

Gemäß einer weiteren bevorzugten Ausführungsform ist das Einstellmittel durch Betätigen eines Einstellelements in seiner Stellung einstellbar. Vorteilhaft ist das Einstellelement mit dem Einstellmittel zumindest wirkverbunden, bevorzugt für die erste und zweite Ausführungsform starr mit dem Einstellmittel verbunden, und bevorzugt für die dritte Ausführungsform drehbar gegenüber dem Einstellmittel gelagert, so dass durch Drehung des Einstellelements um eine Einstellmitteldrehachse das Einstellmittel verschiebbar ist.

Vorzugsweise umfasst das Einstellelement einen Drehknauf oder dergleichen.

Gemäß einer besonders bevorzugten Ausführungsform sind die Ausnehmungen, insbesondere Durchgangsöffnungen, des Kunststoffelements und, abhängig von der Stellung des Einstellelements der ersten Ausführungsform, die Erhöhungen in Fahrzeugsitzhöhenrichtung übereinander angeordnet.

Gemäß einer weiteren bevorzugten Ausführungsform sind das Fahrzeugsitzoberteil und das Fahrzeugsitzunterteil mittels eines Scherengestells miteinander verbunden. Alternativ weist das Fahrzeugsitzoberteil mindestens eine erste und mindestens eine zweite Schwenkachse und das Fahrzeugsitzunterteil mindestens eine dritte und mindestens eine vierte Schwenkachse auf, wobei mittels mindestens einer ersten Verbindungsschwinge die erste und dritte Schwenkachse und mittels mindestens einer zweiten Verbindungsschwinge die zweite und vierte Schwenkachse miteinander verbunden sind.

Insgesamt handelt es sich also um einen Fahrzeugsitz mit einem Scherengestell oder um einen Fahrzeugsitz mit einer Parallelanordnung des Fahrzeugsitzoberteils und des Fahrzeugsitzunterteils.

Gemäß einer weiteren Ausführungsform besteht das Kunststoffelement zumindest teilweise aus Cellasto und/oder Vulkollan. Diese Materialien sind zellige und offenporige Polyurethan (PU)-Schäume, welche besonders langlebig und belastbar sind. Es ist hierbei auch denkbar, dass das Kunststoffelement aus einer Mischung von Cellasto und Vulkollan besteht oder diese Materialien mit anderen PU-Schäumen vermischt sind.

Weiter bevorzugt ist das Einstellmittel mit dem Fahrzeugsitzoberteil und das Kunststoffelement mit dem Fahrzeugsitzunterteil oder das Einstellmittel mit dem Fahrzeugsitzunterteil und das Kunststoffelement mit dem Fahrzeugsitzunterteil verbunden.

Gemäß einer weiteren Ausführungsform ist das Einstellmittel aus einem Kunststoff oder einem Metall ausgebildet. Dabei kann das Einstellmittel durch eine zerspanende Bearbeitung oder durch ein Spritzgussverfahren hergestellt werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: eine erste Ausführungsform;
- Fig. 1A: einen ersten Funktionsbereich des Einstellmittels;
- Fig. 1B: einen zweiten Funktionsbereich des Einstellmittels;
- Fig. 1C: einen dritten Funktionsbereich des Einstellmittels;
- Fig. 2A: ein Einstellmittel gemäß einer weiteren Ausführungsform;
- Fig. 2B: das Einstellmittel gemäß Fig. 2A in einer weiteren perspektivischen Ansicht;
- Fig. 2C: das Einstellmittel gemäß Fig. 2A in einem Querschnitt;
- Fig. 3: eine weitere Ausführungsform;
- Fig. 3A: eine perspektivische Ansicht des Einstellmittels gemäß Fig. 3;
- Fig. 3B: eine Draufsicht des Einstellmittels gemäß Fig. 3;
- Fig. 3C: Querschnitte des Einstellmittels gemäß Fig. 3B
- Fig. 3D: weiterer Querschnitt des Einstellmittels gemäß Fig. 3B;
- Fig. 4A: das Federungs- und Dämpfungselement gemäß Fig. 1 in einer Vorderansicht in einem unbelasteten Zustand in einer ersten Stellung;
- Fig. 4B: das Federungs- und Dämpfungselement gemäß Fig. 4A in einem Querschnitt;
- Fig. 5A: das Federungs- und Dämpfungselement gemäß Fig. 1 in einer Vorderansicht in einem unbelasteten Zustand in einer zweiten Stellung;
- Fig. 5B: das Federungs- und Dämpfungselement gemäß Fig. 5A in einem Querschnitt;
- Fig. 6A: das Federungs- und Dämpfungselement gemäß Fig. 1 in einer Vorderansicht in einem unbelasteten Zustand in einer dritten Stellung;
- Fig. 6B: das Federungs- und Dämpfungselement gemäß Fig. 6A in einem Querschnitt;
- Fig. 7A: das Federungs- und Dämpfungselement gemäß Fig. 1 in einer Vorderansicht in einem teilweise belasteten Zustand in der ersten Stellung;
- Fig. 7B: das Federungs- und Dämpfungselement gemäß Fig. 7A in einem Querschnitt;
- Fig. 8A: das Federungs- und Dämpfungselement gemäß Fig. 1 in einer Vorderansicht in einem teilweise belasteten Zustand in der zweiten Stellung;
- Fig. 8B: das Federungs- und Dämpfungselement gemäß Fig. 8A in einem Querschnitt;
- Fig. 9A: das Federungs- und Dämpfungselement gemäß Fig. 1 in einer Vorderansicht in einem teilweise belasteten Zustand in der dritten Stellung;
- Fig. 9B: das Federungs- und Dämpfungselement gemäß Fig. 9A in einem Querschnitt;
- Fig. 10A: das Federungs- und Dämpfungselement gemäß Fig. 1 in einer Vorderansicht in einem vollständig eingefederten Zustand in der ersten Stellung;
- Fig. 10B: das Federungs- und Dämpfungselement gemäß Fig. 10A in einem Querschnitt;
- Fig. 11A: das Federungs- und Dämpfungselement gemäß Fig. 1 in einer Vorderansicht in einem vollständig eingefederten Zustand in der zweiten Stellung;
- Fig. 11B: das Federungs- und Dämpfungselement gemäß Fig. 11A in einem Querschnitt;
- Fig. 12A: das Federungs- und Dämpfungselement gemäß Fig. 1 in einer Vorderansicht in einem vollständig eingefederten Zustand in der dritten Stellung;
- Fig. 12B: das Federungs- und Dämpfungselement gemäß Fig. 12A in einem Querschnitt;
- Fig. 13A: den Fahrzeugsitz gemäß Fig. 3 in einer perspektivischen Ansicht;
- Fig. 13B: den Fahrzeugsitz gemäß Fig.3 in einer weiteren perspektivischen Ansicht;
- Fig. 14A: den Fahrzeugsitz in einer alternativen Ausführungsform in einer perspektivischen Ansicht;
- Fig. 14B: den Fahrzeugsitz gemäß Fig. 14A in einer weiteren perspektivischen Ansicht;
- Fig. 15A: den Fahrzeugsitz gemäß Fig. 1 in einer perspektivischen Ansicht;
- Fig. 15B: den Fahrzeugsitz gemäß Fig. 15A in einer weiteren perspektivischen Ansicht;
- Fig. 16A: den Fahrzeugsitz gemäß einer weiteren alternativen Ausführungsform in einer perspektivischen Ansicht;
- Fig. 16B: den Fahrzeugsitz gemäß Fig. 16A in einer weiteren perspektivischen Ansicht.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

Zunächst werden in den Figuren verschiedene Ausgestaltungen des erfindungsgemäßen Fahrzeugsitzes aufgezeigt und in den nachfolgenden Figuren genauer die Einstellmittel gemäß verschiedenen Ausführungsformen sowie die Funktionsweise näher beleuchtet.

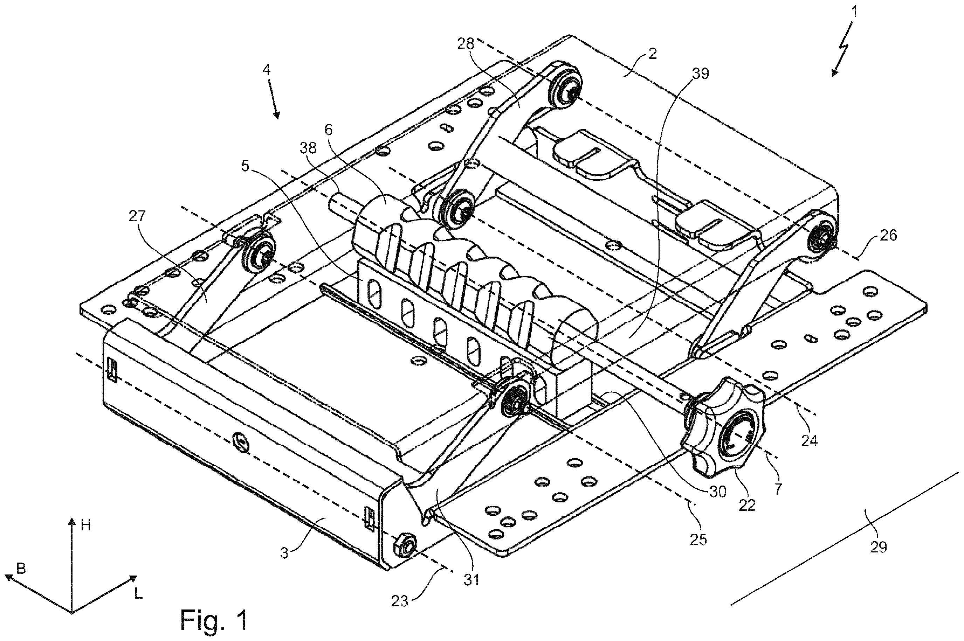

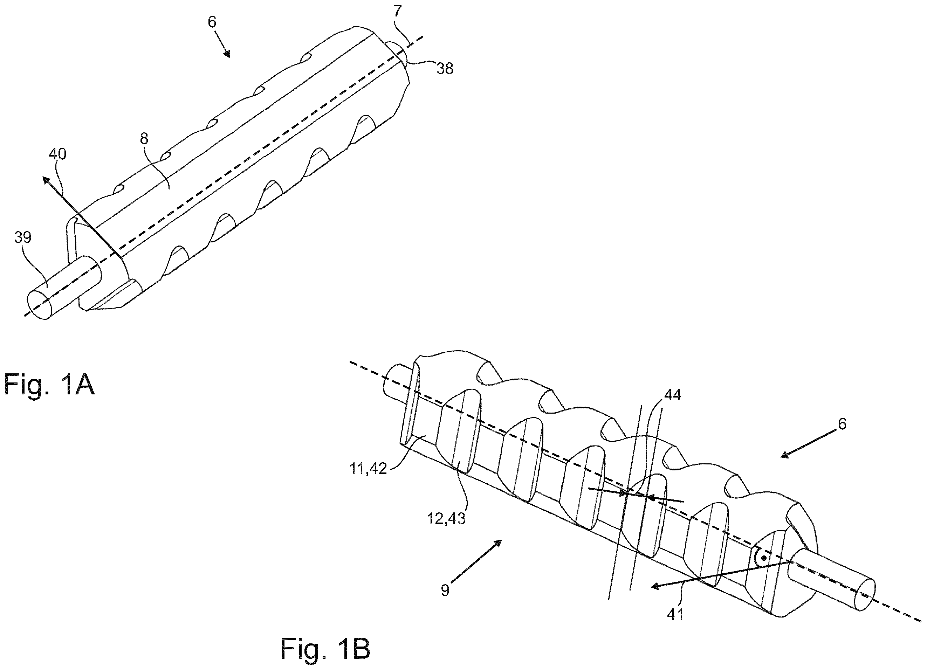

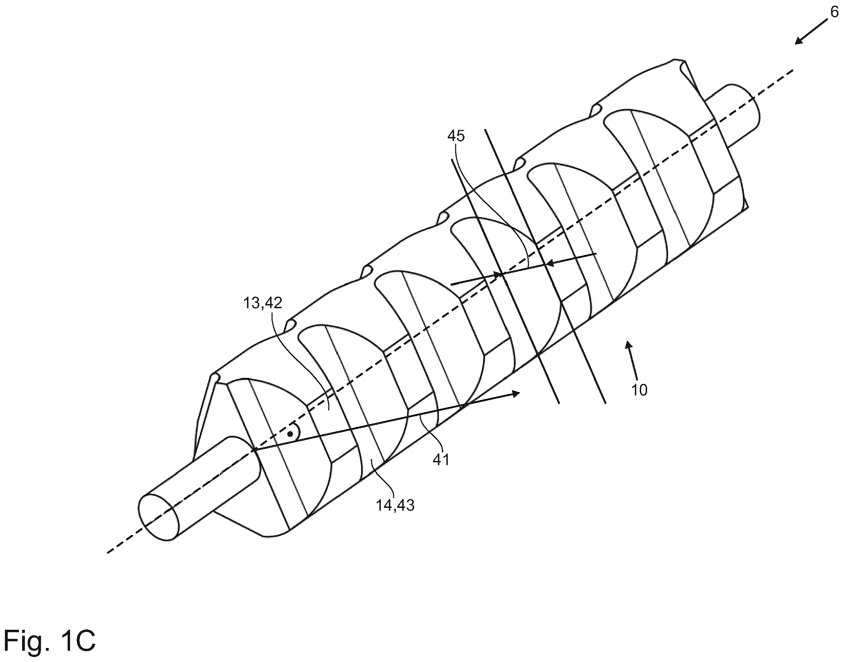

In der Figur 1 ist ein Fahrzeugsitz 1 zu sehen, wobei jedoch ein oberes Fahrzeugsitzelement mit Sitzteil und Rückenlehne hierbei nicht gezeigt werden. Es wird lediglich ein Fahrzeugsitzunterbau gezeigt.

Der Fahrzeugsitz 1 umfasst vorliegend ein Fahrzeugsitzoberteil 2 und ein Fahrzeugsitzunterteil 3, welches mit einer Karossiere 29 eines Fahrzeugs (hier nicht gezeigt) verbunden ist. Vorliegend ist der Fahrzeugsitz 1 mittels einer Parallelfederung ausgestaltet, wobei das Fahrzeugsitzoberteil 2 mit dem Fahrzeugsitzunterteil 3 mittels einer ersten 27 und einer zweiten Verbindungsschwinge 28 verbunden ist. Dabei ist ein erstes Ende 31 der ersten Verbindungsschwinge 27 mittels einer ersten Schwenkachse 23 mit Fahrzeugsitzunterteil 3 und ein zweites Ende 32 der ersten Verbindungsschwinge 27 mittels einer dritten Schwenkachse 25 mit dem Fahrzeugsitzoberteil 2 verbunden. Entsprechend ist ein erstes Ende 33 der zweiten Verbindungsschwinge 28 mittels einer zweiten Schwenkachse 24 mit dem Fahrzeugsitzunterteil 3 und das zweite Ende 34 der zweiten Verbindungsschwinge 28 mittels einer vierten Schwenkachse 26 mit dem Fahrzeugsitzoberteil 2 verbunden.

Die erste 23, die zweite 24, die dritte 25 und die vierte Schwenkachse 26 sind in Fahrzeugsitzbreitenrichtung B verlaufend angeordnet.

Wie weiter aus der Figur 1 zu erkennen ist, ist das Einstellmittel 6 um eine Drehachse 7 drehbar mit dem Fahrzeugsitzoberteil 2 verbunden, wobei die Drehachse 7 in Fahrzeugsitzbreitenrichtung B verlaufend angeordnet ist. Darüber hinaus ist an dem Einstellmittel 6 ein Einstellelement 22 angebracht, mittels welchem durch Drehung in oder gegen den Uhrzeigersinn das Einstellmittel 6 in seiner Stellung verändert werden kann, um andere Funktionsbereiche des Einstellmittels 6 in Wirkkontakt mit dem Kunststoffelement 5 zu bringen.

Das Kunststoffelement 5 hingegen ist mittels eines Positionierungselements 30 mit dem Fahrzeugsitzunterteil 3 verbunden und mittels einer ersten 38 und zweiten Lagerstelle 39 mit dem Fahrzeugsitzoberteil 2 verbunden.

Ein Einstellmittel 6 der Figur 1 ist in den Figuren 1A, 1B und 1C dargestellt, wobei in der Figur 1A ein erster Funktionsbereich 8, in der Figur 1B ein zweiter Funktionsbereich 9 und in der Figur 1C ein dritter Funktionsbereich 10 des Einstellmittels 6 in einer perspektivischen Ansicht dargestellt sind.

Der erste Funktionsbereich 8 ist hierbei flächig ausgebildet, so dass das Kunststoffelement 5 gleichmäßig mit einem Druck bei einer Relativbewegung des Fahrzeugsitzoberteils 2 zu dem Fahrzeugsitzunterteil 3 beaufschlagt werden kann. Dabei erstreckt sich der erste Funktionsbereich 8 in Richtung der Drehachse 7 und in einer Richtung 40 senkrecht zu der Drehachse 7. Vorteilhaft entspricht die Richtung 40 der Fahrzeugsitzlängsrichtung L, wenn der erste Funktionsbereich 8 mit dem Kunststoffelement 5 in Wirkkontakt steht.

Die Figur 1B zeigt den zweiten Funktionsbereich 9 des Einstellmittels 6, wobei der zweite Funktionsbereich 9 mehrere erste Erhöhungen 11 und mehrere erste Vertiefungen 12 aufweist, welche in Richtung der Drehachse 7 gesehen abwechselnd hintereinander angeordnet sind. Wie weiter zu erkennen ist, erstrecken sich die ersten Erhöhungen 11 in einer Richtung 41 senkrecht zu der Drehachse 7. Darüber hinaus umfasst sowohl die ersten Erhöhungen 11 flächige Bereiche 42 also auch die ersten Vertiefungen 12 flächige Bereiche 43, wobei die flächigen Bereiche 42, 43 in Richtung 41 einen ersten Abstand 44 zueinander aufweisen.

Die Figur 1C zeigt den dritten Funktionsbereich 10 des Einstellmittels 6, wobei die Anordnungen der zweiten Erhöhungen 13 und zweiten Vertiefungen 14 ähnlich ist der Anordnung gemäß dem zweiten Funktionsbereich 9, wobei jedoch die flächigen Bereichen 42 und den flächigen Bereichen 43 einen zweiten Abstand 45 zueinander aufweisen, wobei die Länge des ersten Abstandes 44 geringer ist als die Länge des zweiten Abstandes 45.

Insbesondere entspricht die Richtung 41 einem Normalenvektor der flächigen Bereiche 42, 43.

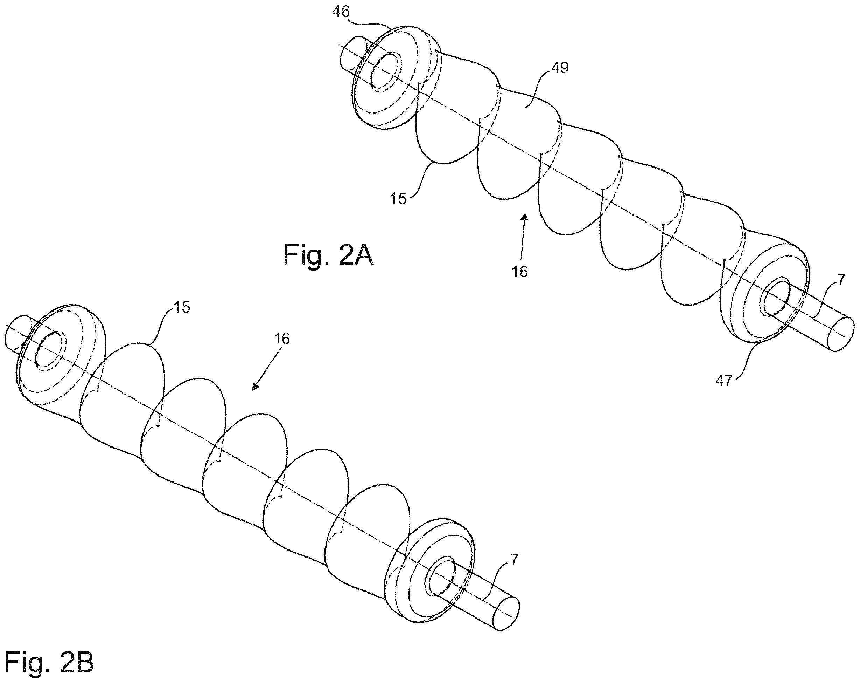

Die Figuren 2A und 2B zeigen eine alternative Ausführungsform des Einstellmittels 6 jeweils in einer perspektivischen Ansicht.

Wie diesen Figuren zu entnehmen ist, ist das Einstellmittel 6 als eine Welle ausgestaltet mit dritten Erhöhungen 15 und dritten Vertiefungen 16, wobei jeweils einer Erhöhung 15 eine Vertiefung 16 und jeder Vertiefung 16 eine Erhöhung 15 in Richtung der Drehachse 7 nachfolgt, wobei sich die Erhöhungen 15 im Querschnitt gesehen in Richtung der Drehachse 7 exzentrisch verjüngen. Weiter weist das Einstellmittel 6 einen ersten Endbereich 46 und einen zweiten Endbereich 47 auf, welche beide vorliegend als eine Erhöhung 15 ausgebildet sind.

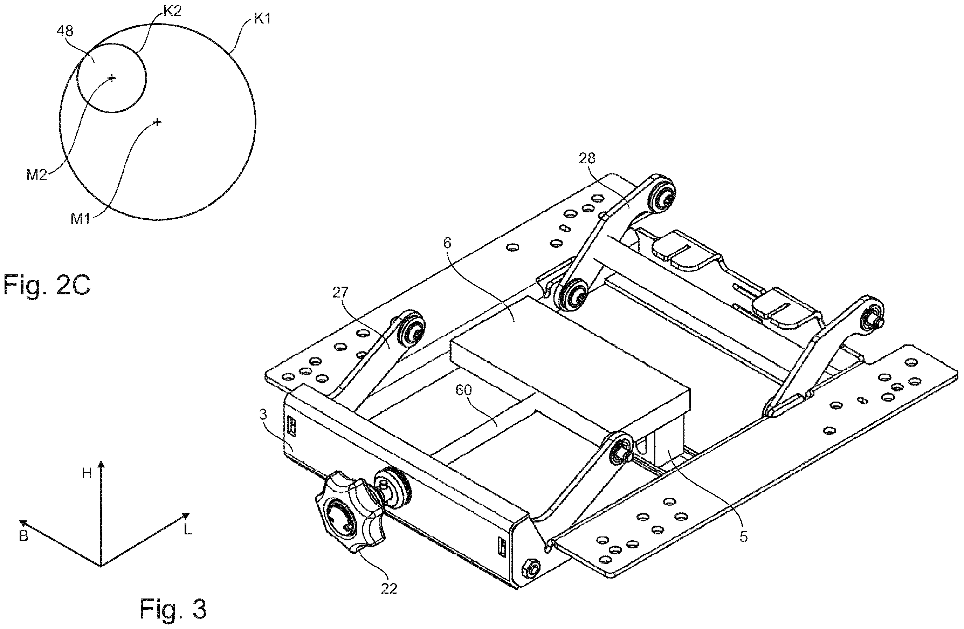

Die Figur 2C zeigt sowohl einen Querschnitt des Einstellmittels 6 mit der minimalsten Verjüngung und entspricht vorzugsweise im Wesentlichen einem ersten Kreis K1 mit Mittelpunkt M1 auf der Drehachse 7, wobei der Querschnitt mit der maximalen Verjüngung einem zweiten Kreis K2 mit Mittelpunkt M2 auf einer Exzenterwelle entspricht mit einem Radius, so dass sich der erste Kreis und der zweite Kreis im Querschnitt in Richtung der Drehachse 7, also beispielsweise in Fahrzeugsitzbreitenrichtung B oder Fahrzeugsitzlängsrichtung L gesehen zumindest in einem Punkt berühren.

Die Tatsache, dass sich der erste K1 und der zweite Kreis K2 zumindest in einem Punkt berühren, hat zur Folge, dass durch die Berührungsfläche 49, also eine Teilfläche der Exzenterwelle 48, eine durchgängige Fläche entsteht, was gleichbedeutend mit dem ersten Funktionsbereich 8 ist.

Durch Drehung des Einstellmittels 6 um die Drehachse 7 können, aufgrund der exzentrischen Verjüngung, unendlich viele Funktionsbereiche mit Erhöhungen 15 und Vertiefungen 16 hergestellt werden, so dass eine präzise Einstellung der Federkennlinie des Federungs- und Dämpfungselements 4 möglich ist.

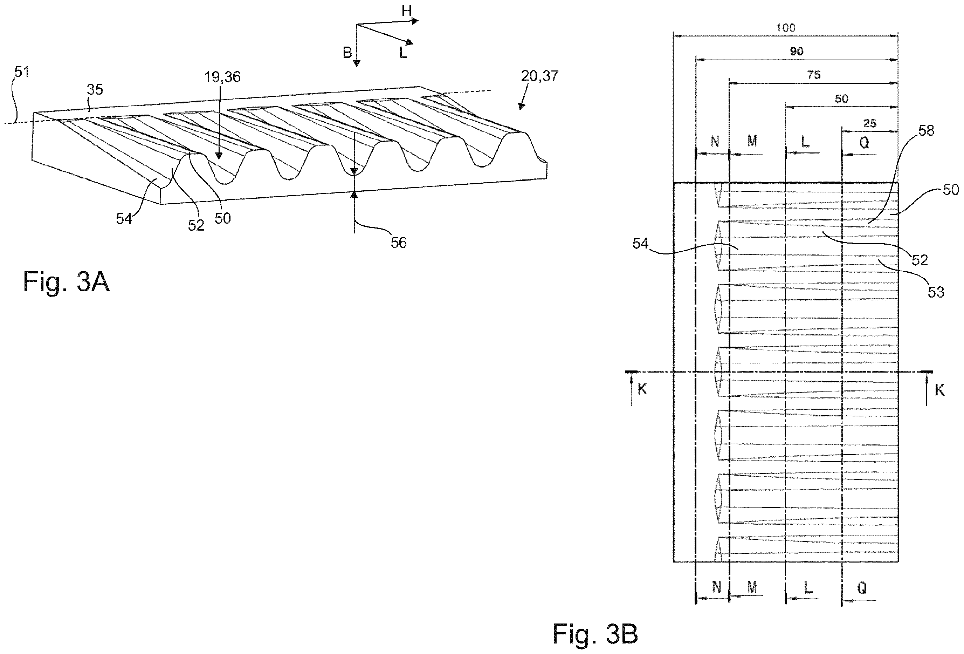

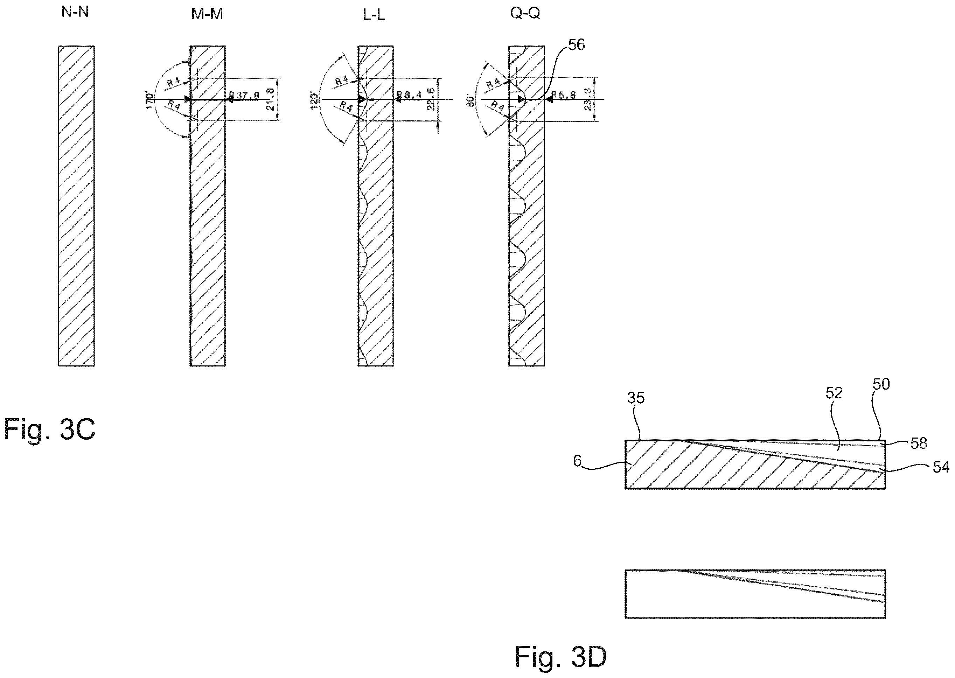

Die Figur 3 zeigt einen ähnlichen Aufbau wie die Figur 1, jedoch unterscheidet sich die Figur 3 vor allem in der Ausgestaltung des Einstellmittels 6 von der Figur 1. Das Einstellmittel 6 der Figur 3 wird in den nachfolgenden Figuren genauer beschrieben und gezeigt. Das Einstellmittel 6 ist hierbei mittels einer Drehachse 60 mit dem Einstellelement 22 verbunden, wobei das Einstellmittel 6 derart ausgestaltet ist, dass durch eine Drehung des Einstellelements 22 um die Drehachse 60 das Einstellmittel 6 linear in Richtung der Fahrzeugsitzlängsrichtung L nach hinten oder nach vorne verschoben wird.

Die Figur 3A zeigt das Einstellmittel 6 der Figur 3 in einer perspektivischen Ansicht. Das Einstellmittel 6 ist im Wesentlichen quaderförmig ausgebildet und weist dabei einen flächigen Abschnitt 35 auf, welcher sich in Fahrzeugsitzlängsrichtung L und Fahrzeugsitzbreitenrichtung B erstreckt und in Fahrzeugsitzlängsrichtung L konstant verläuft.

In Fahrzeugsitzlängsrichtung L anschließend an den flachen Abschnitt 35 schließen sich sowohl erste Bereiche 36 als auch zweite Bereiche 37 an, wobei die ersten Bereiche 36 vierte Vertiefungen 19 ausbilden und die zweiten Bereiche 37 vierte Erhöhungen 20 ausbilden.

Wie der Figur 3A zu entnehmen ist, wird durch Verschiebung des Einstellmittels 6 gemäß der dritten Ausführungsform während der Verschiebung des Einstellmittels die Ausdehnung der Erhöhungen 20 bzw. der Vertiefungen 19 verändert, welche mit dem Kunststoffelement 5 in Wirkkontakt stehen. Dadurch wird der gleiche Effekt wie bei der ersten oder der zweiten Ausführungsform erreicht, nämlich, dass sich die Federkennlinie entsprechend einstellen lässt.

Die vierten Erhöhungen 20 weisen eine obere Fläche 50 auf, welche sich in der Fahrzeugsitzlängsrichtung L und der Fahrzeugsitzbreitenrichtung B erstreckt und keine Veränderung in Fahrzeugsitzhöhenrichtung H aufweist, jedoch in Fahrzeugsitzbreitenrichtung B in seiner Ausdehnung veränderlich ist.

Die vierten Vertiefungen 19 sind wie folgt ausgebildet. Beginnend an einer Kante 51, welche gleichzeitig eine Seite der oberen Fläche 50 ist, beginnen gleichzeitig die vierten Vertiefungen 19, wobei in Höhenrichtung H in Fahrzeugsitzlängsrichtung L gesehen die vierte Vertiefung 19 in ihrer Ausdehnung hinzugewinnt. Die vierten Vertiefungen 19 weisen einen ersten Randbereich 52, einen zweiten Randbereich 53 und einen bogenförmigen Bereich 54 auf, wobei der erste Randbereich 52 und der zweite Randbereich 53 symmetrisch bezüglich der Fahrzeugsitzhöhenrichtung H sind und in einem Querschnitt in Fahrzeugsitzbreitenrichtung B geradlinig verlaufen und einen Winkel 55 zueinander angeordnet sind. Der Winkel 55 verändert sich dabei kontinuierlich, insbesondere verkleinert sich der Winkel 55, in Richtung der Fahrzeugsitzlängsrichtung L. Zwischen den Randbereichen 52, 53 angeordnet und mit den Randbereichen 52, 53 verbunden ist der bogenförmige Bereich 54, welcher ebenfalls symmetrisch zu der Fahrzeugsitzhöhenrichtung H ausgebildet ist. Ebenso verändert sich hierbei ein Abstand 56 der Vertiefung 19 zu einer Grundfläche 57 des Einstellmittels 6.

Zusätzlich können noch, um Beschädigungen des Kunststoffelements 5 durch das Einstellmittel 6 zu minimieren, scharfe Kanten durch Abrundungen 58 ersetzt werden, wie beispielsweise der Figur 3C zu entnehmen ist.

Die Figur 3B zeigt das Einstellmittel 6 der Figur 3A in einer Draufsicht, wobei die Figuren 3C und 3D die jeweiligen Schnitte der Figur 3B aufzeigen.

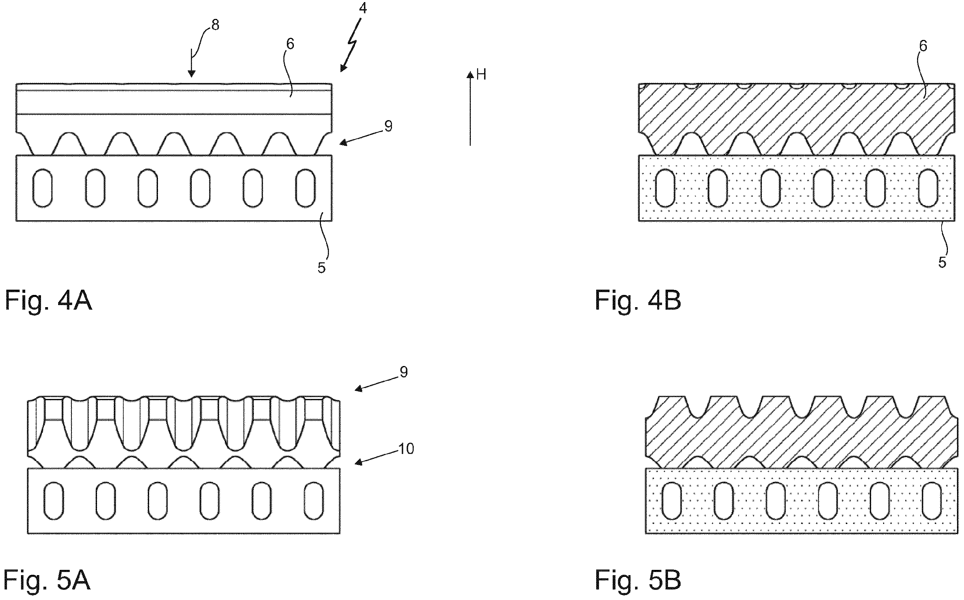

Die Figuren 4A, 4B, 5A, 5B, 6A und 6B zeigen die verschiedenen Funktionsbereiche 8, 9, 10 eines Einstellmittels nach Figuren 1A, 1B und 1C, wobei das Federungs- und Dämpfungselement unbelastet ist, das heißt das Kunststoffelement 5 wurde noch nicht deformiert. Das Funktionsprinzip entspricht vorliegend auch den Funktionsprinzipien der Einstellmittel 6 nach Figuren 2A, 2B und 3A-3D.

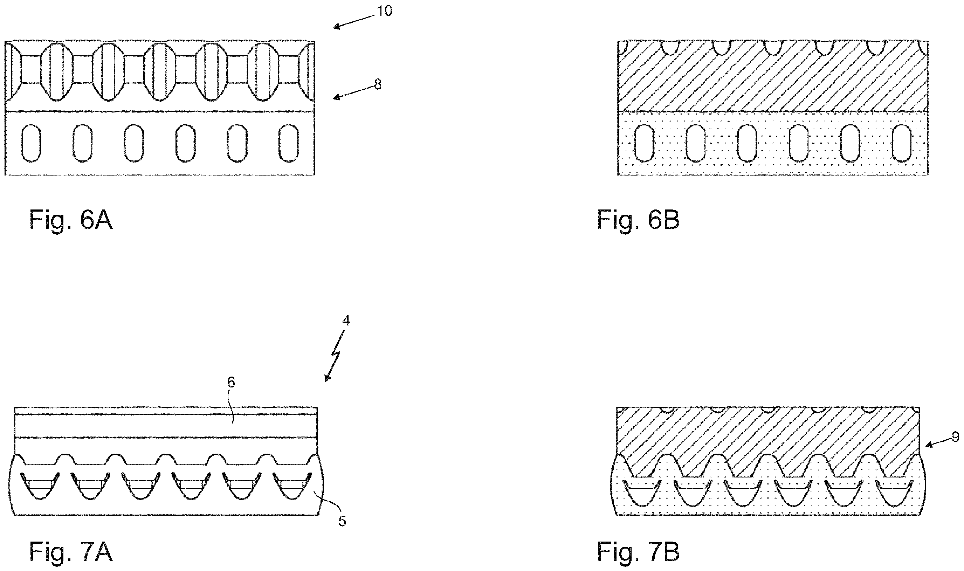

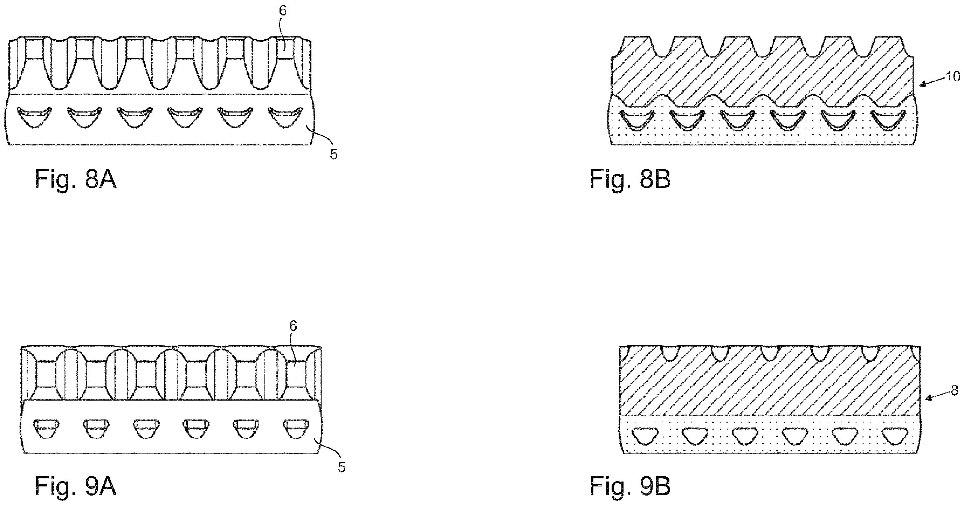

Die Figuren 7A, 7B, 8A, 8B, 9A und 9B zeigen dabei das Federungs- und Dämpfungselement 4 in einer eingefederten, jedoch noch nicht vollständig eingefederten Stellung. Das Kunststoffelement 5 ist teilweise deformiert.

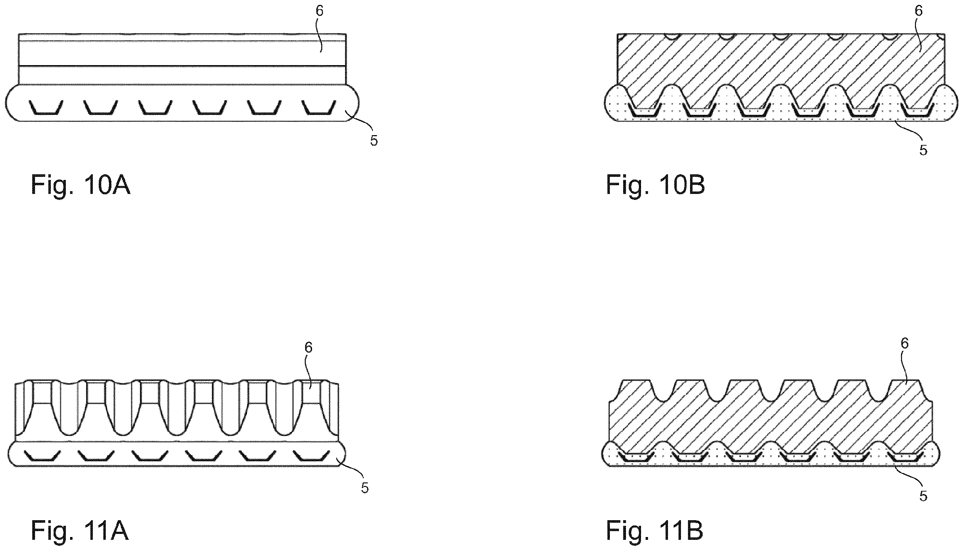

Die Figuren 10A, 10B, 11A, 11B, 12A und 12B zeigen das Federungs- und Dämpfungselement 4 in einer vollständig eingefederten Stellung. Das Kunststoffelement 5 ist maximal deformiert.

Die Figur 4A zeigt das Einstellmittel 6, welches mit dem Kunststoffelement 5 in Wirkkontakt mittels des zweiten Funktionsbereichs 9 steht. Figur 4B zeigt einen Querschnitt der Figur 4A. Figur 5A zeigt das Einstellmittel 6, welches mit dem Kunststoffelement 6 mittels des dritten Funktionsbereichs 10 in Wirkkontakt steht. Entsprechend zeigt die Figur 5B einen Querschnitt der Figur 5A. Die Figur 6A zeigt das Einstellmittel 6, welches mit dem Kunststoffelement 5 mittels des ersten Funktionsbereichs 8 in Wirkkontakt steht. Die Figur 6B zeigt einen Querschnitt der Figur 6A. Das Kunststoffelement 5 umfasst jeweils mehrere Durchgangsöffnungen 59, wobei in Fahrzeugsitzhöhenrichtung H gesehen die jeweiligen Erhöhungen direkt über den Durchgangsöffnungen 59 angeordnet sind. Das Kunststoffelement 5 ist vorliegend noch nicht deformiert. Jeweils ist noch ein weiterer Funktionsbereich den Figuren zu entnehmen.

In den Figuren 7A bis 9B ist das Federungs- und Dämpfungselement 4 der Figuren 4A bis 6B in einer noch nicht vollständig eingefederten Stellung zu entnehmen. Wie aus einem Vergleich der Figuren 7B, 8B und 9B zu erkennen ist, unterscheiden sich die Deformationen des Kunststoffelements 5 doch erheblich, da abhängig von dem Funktionsbereich 8, 9, 10 das Kunststoffelement 5 anders deformiert wird, abhängig von der Erstreckung der Erhöhungen und Vertiefungen, wobei der erste Funktionsbereich 8 eine gleichmäßige Druckeinwirkung auf das Kunststoffelement 5 hervorruft. Je weiter sich die Erhöhungen erstrecken, desto geringer ist die Druckbelastung des Kunststoffelements 5, da mehr Material in die Vertiefungen ausweichen kann während des Federvorgangs, wie aus den Figuren gut zu erkennen ist. Natürlich spielt auch die Anzahl der Ausnehmungen 21, vorliegend der Durchgangsöffnungen 59, eine wichtige Rolle bei der Einstellung der Federkennlinie des Federungs- und Dämpfungselement 4. Je mehr Durchgangsöffnungen 59 vorhanden sind, desto flacher ist die Federkennlinie des Federungs- und Dämpfungselements 4 ausgebildet, unabhängig von der Stellung des jeweiligen Einstellmittels 6.

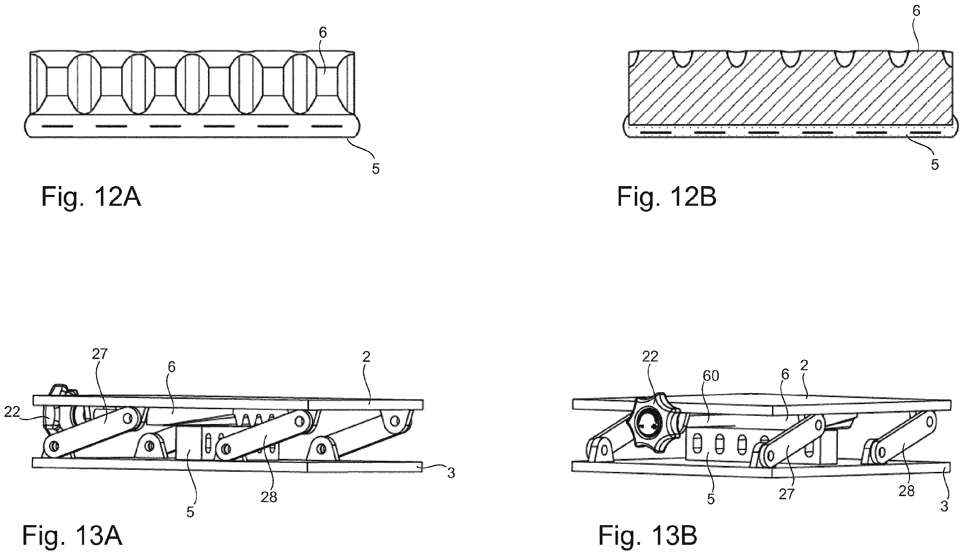

Wie aus dem Vergleich der Figuren 10A, 10B mit den Figuren 11A, 11B und 12A und 12B zu erkennen ist, ist das Kunststoffelement 5 unterschiedlich stark deformiert, abhängig von der auf das Kunststoffelement 5 wirkende und mit dem Kunststoffelement 5 wirkverbundenen Funktionsbereich 8, 9, 10.

Aus den Figuren 10A bis 12B ist zu erkennen, dass das Federungs- und Dämpfungselement 4 vollständig eingefedert ist, das heißt, dass das Kunststoffelement 5 jeweils maximal deformiert ist. Abhängig vom jeweiligen Funktionsbereich 8, 9, 10 ist eine unterschiedliche maximale Deformation zu erkennen, wobei der erste Funktionsbereich 8 eine stärkere Deformation hervorruft als der zweite 9 oder dritte Funktionsbereich 10. Entsprechend verhält sich die Federkennlinie des Federungs- und Dämpfungselements 4.

Die Figuren 13A und 13B zeigen die Figur 3 in verschiedenen perspektivischen Darstellungen.

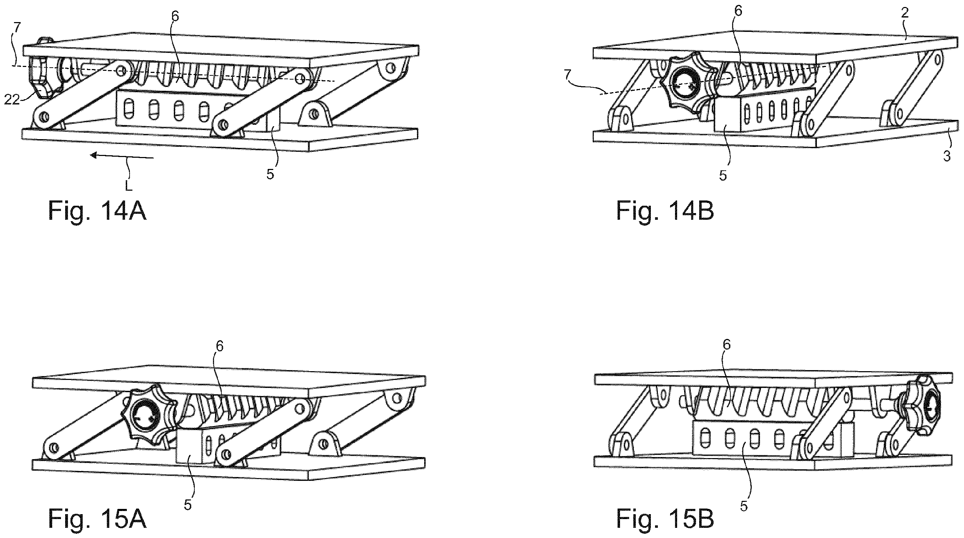

Die Figuren 14A und 14B zeigen eine alternative Ausführungsform der Figur 1, wobei das Einstellmittel 6 sich in Fahrzeugsitzlängsrichtung L erstreckt und die Drehachse 7 sich ebenso in Fahrzeugsitzlängsrichtung L erstreckt. Ebenso erstreckt sich das Kunststoffelement 5 sich in Fahrzeugsitzlängsrichtung L.

Die Figuren 15A und 15B zeigen die Figur 1 in weiteren verschiedenen perspektivischen Ansichten.

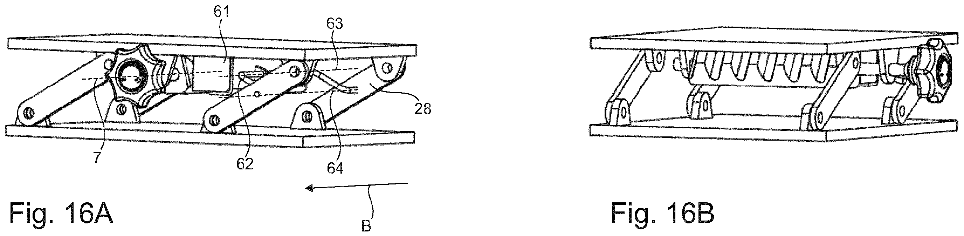

Die Figuren 16A und 16B zeigen eine weitere alternative Ausführungsform, wobei vorliegend das Einstellmittel 6 mit dem Fahrzeugsitzoberteil 2 verbunden ist und die Drehachse 7 in Fahrzeugsitzbreitenrichtung B verlaufend angeordnet ist.

Darüber hinaus ist das Kunststoffelement 5 mittels eines Halteelements 61 mit dem Fahrzeugsitzoberteil 2 verbunden, wobei das Halteelement 61 mittels eines Bügelelements 62 mit der zweiten Verbindungsschwinge 28 verbunden ist. Das Bügelelement 62 ist einerseits schwenkbar um eine fünfte Schwenkachse 63 mit dem Halteelement 61 verbunden und andererseits schwenkbar um eine sechsten Schwenkachse 64 mit der zweiten Verbindungsschwinge 28 verbunden.

### Bezugszeichenliste

- 1: Fahrzeugsitz
- 2: Fahrzeugsitzoberteil
- 3: Fahrzeugsitzunterteil
- 4: Federungs- und Dämpfungselement
- 5: Kunststoffelement
- 6: Einstellmittel
- 7: Drehachse
- 8: erster Funktionsbereich
- 9: zweiter Funktionsbereich
- 10: dritter Funktionsbereich
- 11: erste Erhöhung
- 12: erste Vertiefung
- 13: zweite Erhöhung
- 14: zweite Vertiefung
- 15: dritte Erhöhung
- 16: dritte Vertiefung
- 17: erster Bereich
- 18: zweiter Bereich
- 19: vierte Vertiefung
- 20: vierte Erhöhung
- 21: Ausnehmung
- 22: Einstellelement
- 23: erste Schwenkachse
- 24: zweite Schwenkachse
- 25: dritte Schwenkachse
- 26: vierte Schwenkachse
- 27: erste Verbindungsschwinge
- 28: zweite Verbindungsschwinge
- 29: Karosserie
- 30: Positionierungselement
- 31: erstes Ende der ersten Verbindungsschwinge
- 32: zweites Ende der ersten Verbindungsschwinge
- 33: erstes Ende der zweiten Verbindungsschwinge
- 34: zweites Ende der zweiten Verbindungsschwinge
- 35: flacher Abschnitt
- 36: erster Bereich
- 37: zweiter Bereich
- 38: erste Lagerstelle
- 39: zweite Lagerstelle
- 40: Richtung
- 41: Richtung
- 42: flächiger Bereich
- 43: flächiger Bereich
- 44: erster Abstand
- 45: zweiter Abstand
- 46: erster Endbereich
- 47: zweiter Endbereich
- 48: Exzenterwelle
- 49: Berührungsfläche
- 50: obere Fläche
- 51: Kante
- 52: erster Randbereich
- 53: zweiter Randbereich
- 54: bogenförmiger Bereich
- 55: Winkel
- 56: Abstand
- 57: Grundfläche
- 58: Abrundung
- 59: Durchgangsöffnung
- 60: Drehachse
- 61: Halteelement
- 62: Bügelelement
- 63: fünfte Schwenkachse
- 64: sechste Schwenkachse
- K1: erster Kreis
- K2: zweiter Kreis
- M1: erster Mittelpunkt
- M2: zweiter Mittelpunkt
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einem Fahrzeugsitzoberteil (2) und einem Fahrzeugsitzunterteil (3), wobei das Fahrzeugsitzoberteil (2) relativ zum Fahrzeugsitzunterteil (3) bewegbar ist und das Fahrzeugsitzoberteil (2) mittels einem Federungs- und Dämpfungselementes (4) gegenüber dem Fahrzeugsitzunterteil (3) federbar und dämpfbar ist,
**dadurch gekennzeichnet, dass**
das Federungs- und Dämpfungselement (4) ein reversibel verformbares Kunststoffelement (5) und ein Einstellelement (6) aufweist, wobei das Kunststoffelement (5) und das Einstellelement (6) in Wirkkontakt stehen und abhängig von der Stellung des Einstellelements (6) relativ zum Kunststoffelement (5) die Federkennlinie des Federungs- und Dämpfungselements (4) einstellbar ist.

2. Fahrzeugsitz (1) nach Anspruch 1,
**dadurch gekennzeichnet, dass**
das Einstellmittel (6) eine in einer Fahrzeugsitzbreitenrichtung (B) oder eine in einer Fahrzeugsitzlängsrichtung (L) verlaufende Drehachse (7) aufweist, um welche das Einstellmittel (6) drehbar gelagert ist, und mindestens drei verschiedene Funktionsbereiche (8, 9, 10) aufweist, wobei ein erster Funktionsbereich (8) rechteckig ausgestaltet ist, ein zweiter Funktionsbereich (9) erste Erhöhungen (11) und erste Vertiefungen (12) aufweist, welche senkrecht zu der Fahrzeugsitzbreitenrichtung (B) angeordnet sind, und ein dritter Funktionsbereich (10) zweite Erhöhungen (13) und zweite Vertiefungen (14) aufweist, welche senkrecht zu der Fahrzeugsitzbreitenrichtung (B) oder Fahrzeugsitzlängsrichtung (L) angeordnet sind.

3. Fahrzeugsitz (1) nach Anspruch 1,
**dadurch gekennzeichnet, dass**
das Einstellmittel (6) eine in einer Fahrzeugsitzbreitenrichtung (B) oder eine in einer Fahrzeugsitzlängsrichtung (L) verlaufende Drehachse (7) aufweist, um welche das Einstellmittel (6) drehbar gelagert ist, wobei das Einstellmittel (6) als eine Welle mit dritten Erhöhungen (15) und dritten Vertiefungen (16) ausgestaltet ist, wobei jeweils einer Erhöhung (15) eine Vertiefung (16) und jeder Vertiefung (16) eine Erhöhung (15) in Fahrzeugsitzbreitenrichtung (B) oder Fahrzeugsitzlängsrichtung (L) gesehen nachfolgt, wobei sich die Erhöhungen (15) im Querschnitt in Fahrzeugsitzbreitenrichtung (B) oder Fahrzeugsitzlängsrichtung (L) gesehen exzentrisch verjüngen.

4. Fahrzeugsitz (1) nach Anspruch 1,
**dadurch gekennzeichnet, dass**
das Einstellmittel (6) in einer Fahrzeugsitzlängsrichtung (L) verschiebbar ist und im Wesentlichen quaderförmig ausgestaltet ist, wobei das Einstellmittel (6) erste Bereiche (17), die in Fahrzeugsitzlängsrichtung (L) gesehen nach hinten oder nach vorne in ihrer Ausdehnung in einer Fahrzeugsitzhöhenrichtung (L) stetig zunehmen, um vierte Vertiefungen (19) ausbilden, und zweite Bereiche (18), welche in Fahrzeugsitzhöhenrichtung (H) gesehen vierte Erhöhungen (20) ausgestalten.

5. Fahrzeugsitz (1) nach Anspruch 1,
**dadurch gekennzeichnet, dass**
das Kunststoffelement (5) im Wesentlichen quaderförmig ausgebildet ist und mindestens eine Ausnehmung (21) aufweist, welche vorzugsweise als eine Durchgangsöffnung (59) in Fahrzeugsitzlängsrichtung (L) oder Fahrzeugsitzbreitenrichtung (B) ausgebildet ist.

6. Fahrzeugsitz (1) nach einem der vorangegangenen Ansprüche,
**dadurch gekennzeichnet, dass**
das Einstellmittel (6) durch Betätigen eines Einstellelements (22) betätigbar ist.

7. Fahrzeugsitz (1) nach einem der Ansprüche 2, 3 oder 4,
**dadurch gekennzeichnet, dass**
die Erhöhungen (11, 13, 15, 20) des Einstellmittels (6) in Fahrzeugsitzhöhenrichtung (H) gesehen über Ausnehmungen (21) des Kunststoffelements (6) angeordnet sind.

8. Fahrzeugsitz (1) nach einem der vorangegangenen Ansprüche,
**dadurch gekennzeichnet, dass**
bei einer Bewegung des Fahrzeugsitzoberteils (2) relativ zum Fahrzeugsitzunterteil (3) durch das Einstellmittel (6) das Kunststoffelement (5) deformierbar ist, wodurch eine Dämpfung der Bewegung des Fahrzeugsitzoberteils (2) hervorrufbar ist.

9. Fahrzeugsitz nach einem der vorangegangenen Ansprüche,
**dadurch gekennzeichnet, dass**
das Fahrzeugsitzoberteil (2) und das Fahrzeugsitzunterteil (3) mittels eines Scherengestells miteinander verbunden sind oder das Fahrzeugsitzoberteil (2) eine erste (23) und mindestens eine zweite Schwenkachse (24) und das Fahrzeugsitzunterteil (3) eine dritte (25) und eine vierte Schwenkachse (26) aufweist, wobei mittels mindestens einer ersten Verbindungsschwinge (27) die erste (23) und dritte Schwenkachse (25) und mittels mindestens einer zweiten Verbindungsschwinge (28) die zweite (24) und vierte Schwenkachse (26) miteinander verbunden sind.

10. Fahrzeugsitz nach einem der vorangegangenen Ansprüche
**dadurch gekennzeichnet, dass**
das Kunststoffelement (5) zumindest teilweise aus Cellasto und/oder Vulkollan besteht.

11. Fahrzeugsitz nach einem der vorangegangenen Ansprüche,
**dadurch gekennzeichnet, dass**
das Einstellmittel (6) mit dem Fahrzeugsitzoberteil (2) und das Kunststoffelement (5) mit dem Fahrzeugsitzunterteil (3) oder das Einstellmittel (6) mit dem Fahrzeugsitzunterteil (3) und das Kunststoffelement (5) mit dem Fahrzeugsitzoberteil (2) verbunden ist.

12. Fahrzeugsitz nach einem der vorangegangenen Ansprüche,
**dadurch gekennzeichnet, dass**
das Einstellmittel (6) aus einem Kunststoff oder einem Metall ausgebildet ist.

## Claims

1. Vehicle seat (1) comprising a vehicle seat upper part (2) and a vehicle seat lower part (3), the vehicle seat upper part (2) being movable relative to the vehicle seat lower part (3) and it being possible to spring and damp the vehicle seat upper part (2) with respect to the vehicle seat lower part (3) by means of a suspension and damping element (4),
**characterised in that**
the suspension and damping element (4) comprises a reversibly deformable plastics element (5) and an adjustment element (6), the plastics element (5) and the adjustment element (6) being in operative contact, and it being possible to adjust the spring characteristics of the suspension and damping element (4) depending on the position of the adjustment element (6) relative to the plastics element (5).

2. Vehicle seat (1) according to claim 1,
**characterised in that**
the adjustment means (6) has a rotational axis (7) that extends in a vehicle seat width direction (B) or that extends in a vehicle seat longitudinal direction (L), the adjustment means (6) being mounted so as to rotate about said axis, and comprising at least three different functional regions (8, 9, 10), a first functional region (8) being rectangular, a second functional region (9) comprising first elevations (11) and first recesses (12) which are arranged perpendicularly to the vehicle seat width direction (B), and a third functional region (10) comprising second elevations (13) and second recesses (14) which are arranged perpendicularly to the vehicle seat width direction (B) or vehicle seat longitudinal direction (L).

3. Vehicle seat (1) according to claim 1,
**characterised in that**
the adjustment means (6) has a rotational axis (7) that extends in a vehicle seat width direction (B) or that extends in a vehicle seat longitudinal direction (L), the adjustment means (6) being mounted so as to rotate about said axis, the adjustment means (6) being designed as a shaft having third elevations (15) and third recesses (16), a recess (16) following an elevation (15) in each case and an elevation (15) following each recess (16) as viewed in the vehicle seat width direction (B) or vehicle seat longitudinal direction (L), the elevations (15) tapering eccentrically in cross section as viewed in the vehicle seat width direction (B) or vehicle seat longitudinal direction (L).

4. Vehicle seat (1) according to claim 1,
**characterised in that**
the adjustment means (6) is moveable in a vehicle seat longitudinal direction (L) and is substantially cuboid, the adjustment means (6) comprising first regions (17), the extent of which, in a vehicle seat height direction (L), continuously increases towards the rear or towards the front as viewed in the vehicle seat longitudinal direction (L), in order to form fourth recesses (19), and second regions (18) which form fourth elevations (20) as viewed in the vehicle seat height direction (H).

5. Vehicle seat (1) according to claim 1,
**characterised in that**
the plastics element (5) is substantially cuboid and has at least one recess (21) which is preferably formed as a through-opening (59) in the vehicle seat longitudinal direction (L) or in the vehicle seat width direction (B).

6. Vehicle seat (1) according to any of the preceding claims,
**characterised in that**
the adjustment means (6) is actuatable by actuating an adjustment element (22).

7. Vehicle seat (1) according to any of claims 2, 3 or 4,
**characterised in that**
the elevations (11, 13, 15, 20) of the adjustment means (6) are arranged above recesses (21) of the plastics element (6) as viewed in the vehicle seat height direction (H).

8. Vehicle seat (1) according to any of the preceding claims,
**characterised in that**
the plastics element (5) is deformable by the adjustment means (6) with a movement of the vehicle seat upper part (2) relative to the vehicle seat lower part (3), as a result of which a damping of the movement of the vehicle seat upper part (2) is causable.

9. Vehicle seat according to any of the preceding claims,
**characterised in that**
the vehicle seat upper part (2) and the vehicle seat lower part (3) are interconnected by means of a scissor-action frame, or the vehicle seat upper part (2) has a first (23) and at least one second pivot axis (24), and the vehicle seat lower part (3) has a third (25) and a fourth pivot axis (26), the first (23) and third pivot axis (25) being interconnected by means of at least one first connecting swing arm (27), and the second (24) and fourth pivot axis (26) being interconnected by means of at least one second connecting swing arm (28).

10. Vehicle seat according to any of the preceding claims,
**characterised in that**
the plastics element (5) consists at least in part of Cellasto and/or Vulkollan.

11. Vehicle seat according to any of the preceding claims,
**characterised in that**
the adjustment means (6) is connected to the vehicle seat upper part (2) and the plastics element (5) is connected to the vehicle seat lower part (3), or the adjustment means (6) is connected to the vehicle seat lower part (3) and the plastics element (5) is connected to the vehicle seat upper part (2).

12. Vehicle seat according to any of the preceding claims,
**characterised in that**
the adjustment means (6) is made of a plastics material or a metal.

## Revendications

1. Siège de véhicule (1) comportant une partie supérieure (2) de siège de véhicule et une partie inférieure (3) de siège de véhicule, la partie supérieure (2) de siège de véhicule étant déplaçable par rapport à la partie inférieure (3) de siège de véhicule et la partie supérieure (2) de siège de véhicule étant apte à être suspendue élastiquement et à être amortie par rapport à la partie inférieure (3) de siège de véhicule au moyen d'un élément (4) de suspension et d'amortissement,
**caractérisé par le fait que**
l'élément (4) de suspension et d'amortissement présente un élément en matière plastique (5), déformable de façon réversible, et un élément de réglage (6), l'élément en matière plastique (5) et l'élément de réglage (6) étant en contact actif et, en fonction de la position de l'élément de réglage (6) par rapport à l'élément en matière plastique (5), la courbe caractéristique élastique de l'élément (4) de suspension et d'amortissement étant réglable.

2. Siège de véhicule (1) selon la revendication 1,
**caractérisé par le fait que**
le moyen de réglage (6) présente un axe de rotation (7) s'étendant dans une direction de la largeur du siège de véhicule (B) ou s'étendant dans une direction longitudinale du siège de véhicule (L), autour duquel le moyen de réglage (6) est monté rotatif, et au moins trois régions fonctionnelles différentes (8, 9, 10), une première région fonctionnelle (8) étant réalisée rectangulaire, une deuxième région fonctionnelle (9) présentant des premières élévations (11) et des premières dépressions (12), lesquelles sont disposées perpendiculairement à la direction de la largeur du siège de véhicule (B), et une troisième région fonctionnelle (10) présentant des secondes élévations (13) et des secondes dépressions (14), lesquelles sont disposées perpendiculairement à la direction de la largeur du siège de véhicule (B) ou à la direction longitudinale du siège de véhicule (L).

3. Siège de véhicule (1) selon la revendication 1,
**caractérisé par le fait que**
le moyen de réglage (6) présente un axe de rotation (7) s'étendant dans une direction de la largeur du siège de véhicule (B) ou s'étendant dans une direction longitudinale du siège de véhicule (L), autour duquel le moyen de réglage (6) est monté rotatif, le moyen de réglage (6) étant réalisé sous la forme d'un arbre comportant des troisièmes élévations (15) et des troisièmes dépressions (16), dans chaque cas une dépression (16) suivant une élévation (15) et une élévation (15) suivant chaque dépression (16) vu dans la direction de la largeur du siège de véhicule (B) ou dans la direction longitudinale du siège de véhicule (L), les élévations (15) s'effilant de façon excentrique en coupe transversale, vu dans la direction de la largeur du siège de véhicule (B) ou dans la direction longitudinale du siège de véhicule (L).

4. Siège de véhicule (1) selon la revendication 1,
**caractérisé par le fait que**
le moyen de réglage (6) est déplaçable dans une direction longitudinale du siège de véhicule (L) et est réalisé sensiblement en forme de parallélépipède, le moyen de réglage (6) présentant des premières régions (17) qui augmentent de façon continue dans une direction de la hauteur du siège de véhicule (L) dans leur étendue vers l'arrière ou vers l'avant, vu dans la direction longitudinale du siège de véhicule (L), afin de former des quatrièmes dépressions (19), et des secondes régions (18), lesquelles forment des quatrièmes élévations (20), vu dans la direction de la hauteur du siège de véhicule (H).

5. Siège de véhicule (1) selon la revendication 1,
**caractérisé par le fait que**
l'élément en matière plastique (5) est réalisé sensiblement en forme de parallélépipède et présente au moins un renfoncement (21), lequel est réalisé de préférence sous la forme d'une ouverture traversante (59) dans la direction longitudinale du siège de véhicule (L) ou dans la direction de la largeur du siège de véhicule (B).

6. Siège de véhicule (1) selon l'une des revendications précédentes,
**caractérisé par le fait que**
le moyen de réglage (6) est actionnable par actionnement d'un élément de réglage (22).

7. Siège de véhicule (1) selon l'une des revendications 2, 3 ou 4,
**caractérisé par le fait que**
les élévations (11, 13, 15, 20) de l'élément de réglage (6) sont disposées au-dessus de renfoncements (21) de l'élément en matière plastique (6), vu dans la direction de la hauteur du siège de véhicule (H).

8. Siège de véhicule (1) selon l'une des revendications précédentes,
**caractérisé par le fait que**
lors d'un déplacement de la partie supérieure (2) du siège de véhicule par rapport à la partie inférieure (3) du siège de véhicule, l'élément en matière plastique (5) est déformable par l'élément de réglage (6), ce par quoi un amortissement du déplacement de la partie supérieure (2) du siège de véhicule est apte à être provoqué.

9. Siège de véhicule selon l'une des revendications précédentes,
**caractérisé par le fait que**
la partie supérieure (2) de siège de véhicule et la partie inférieure (3) de siège de véhicule sont reliées l'une à l'autre au moyen d'un bâti à ciseaux ou la partie supérieure (2) de siège de véhicule présente un premier (23) et au moins un deuxième axe de pivotement (24) et la partie inférieure (3) de siège de véhicule présente un troisième (25) et un quatrième axe de pivotement (26), le premier (23) et le troisième axe de pivotement (25) étant reliés l'un à l'autre au moyen d'au moins un premier bras oscillant de liaison (27) et le deuxième (24) et le quatrième axe de pivotement (26) étant reliés l'un à l'autre au moyen d'au moins un second bras oscillant de liaison (28).

10. Siège de véhicule selon l'une des revendications précédentes,
**caractérisé par le fait que**
l'élément en matière plastique (5) est constitué au moins en partie de Cellasto et/ou de Vulkollan.

11. Siège de véhicule selon l'une des revendications précédentes,
**caractérisé par le fait que**
le moyen de réglage (6) est relié à la partie supérieure (2) de siège de véhicule et l'élément en matière plastique (5) est relié à la partie inférieure (3) de siège de véhicule ou le moyen de réglage (6) est relié à la partie inférieure (3) de siège de véhicule et l'élément en matière plastique (5) est relié à la partie supérieure (2) de siège de véhicule.

12. Siège de véhicule selon l'une des revendications précédentes,
**caractérisé par le fait que**
le moyen de réglage (6) est formé d'une matière plastique ou d'un métal.
